# EUROPEAN PATENT SPECIFICATION

(11) **EP 4 119 602 B1**
(45) Date of publication and mention of the grant of the patent: **25.11.2026**
(21) Application number: 21768163.4
(22) Date of filing: 02.03.2021
(51) Int. Cl.: C08J 5/24, B29C 70/10, B29C 70/18, B29C 70/40, C08J 5/06, B29K 105/12, B29C 70/12, B29C 70/46, B29C 70/50

(54) **CFRP STRUCTURAL BODY, METHOD FOR MANUFACTURING CFRP STRUCTURAL BODY, CARBON FIBER PREPREG, AND METHOD FOR MANUFACTURING CARBON FIBER PREPREG**
CFRP-STRUKTURKÖRPER, VERFAHREN ZUR HERSTELLUNG EINES CFRP-STRUKTURKÖRPERS, KOHLENSTOFFFASER-PREPREG, UND VERFAHREN ZUR HERSTELLUNG EINES KOHLENSTOFFFASER-PREPREGS
CORPS STRUCTURAL DE CFRP, PROCÉDÉ DE PRODUCTION D'UN CORPS STRUCTURAL CFRP, PRÉIMPRÉGNÉ DE FIBRES DE CARBONE ET PROCÉDÉ DE PRODUCTION DE PRÉIMPRÉGNÉ DE FIBRES DE CARBONE

(30) Priority: 11.03.2020 JP 2020041696; 12.11.2020 JP 2020188835; 22.12.2020 JP 2020211943
(43) Date of publication of application: 18.01.2023
(73) Proprietor: Mitsubishi Chemical Corporation, Chiyoda-ku Tokyo 100-8251 (JP)
(72) Inventor: KONAMI Yukichi, Tokyo 100-8251 (JP)
(74) Representative: Hoffmann Eitle
(86) International application number: PCT/JP2021/007853
(87) International publication number: WO 2021/182172

(56) References cited:
- EP-A1- 2 740 578
- EP-A1- 2 862 893
- WO-A1-2013/115337
- WO-A1-2019/194090
- JP-A- 2008 174 605
- JP-A- 2011 241 338
- JP-A- 2017 205 878
- JP-A- 2018 167 588
- JP-A- H01 163 218
- JP-A- H01 163 219
- US-A1- 2019 366 681
- DATABASE WPI Week 199321, 1993 Derwent World Patents Index; AN 1993-172708, XP002809702

## Description

### [Technical Field]

The present invention mainly relates to a CFRP structural body, a method for manufacturing a CFRP structural body, a carbon fiber prepreg, and a method for manufacturing a carbon fiber prepreg.

Priority is claimed on Japanese Patent Application No. 2020-41696 filed on March 11, 2020, Japanese Patent Application No. 2020-188835 filed on November 12, 2020, and Japanese Patent Application No. 2020-211943 filed on December 22, 2020.

### [Background Art]

Carbon fiber reinforced plastic (CFRP) is a composite material formed of carbon fibers and resin, which is widely used in parts of aircraft, automobiles, ships, and various other transportation equipment, sporting goods, leisure goods, and the like.

A method for manufacturing a CFRP product including molding a CFRP structural body from a carbon fiber prepreg using a chopped carbon fiber bundle (also called "chopped carbon fiber strand", "chopped carbon fiber tow", and the like) by a compression molding method is in practical use.

Typical examples of carbon fiber prepregs using chopped carbon fiber bundles are sheet molding compounds (SMC), bulk molding compounds (BMC) and stampable sheets.

An SMC has a structure in which a mat comprising chopped carbon fiber bundles is impregnated with a thermosetting resin composition. Stampable sheets have a structure in which a mat comprising chopped carbon fiber bundles is impregnated with a thermoplastic resin composition.

One additive which may be added to CFRP is a flame retardant (Patent Document 1). Patent documents 2 and 3 are also cited.

### [Citation List]

### [Patent Document]

[Patent Document 1]
   Japanese Unexamined Patent Application, First Publication No. 2018-48238
[Patent Document 2] US2019/366681 A1; [Patent Document 3] EP 2 862 893 A1

### [Summary of Invention]

### [Technical Problem]

Objects of the present invention include providing a CFRP structural body with improved flame retardancy.

The objects of the present invention further include providing a carbon fiber prepreg capable of giving a CFRP structural body having improved flame retardancy.

Besides them, various problems which can be solved by the present invention are disclosed in the present specification either explicitly or implicitly.

### [Solution to Problem]

By performing vertical flammability tests on CFRP produced from SMC, the present inventors found that a carbon fiber content, a filament count of a carbon fiber bundle used for manufacturing SMC , and a test specimen thickness influence a flame retardancy of CFRP. More specifically, they found that the flame retardancy of the CFRP was favorable when the carbon fiber content was higher, when the filament count of the carbon fiber bundle used for manufacturing the SMC was smaller when the carbon fiber content was sufficient and when the test specimen was thicker.

The present invention was created based on these findings and is defined in the appended claims.

### [Advantageous Effects of Invention]

According to one of the embodiments, there is provided a CFRP structural body with improved flame retardancy.

According to another one of the embodiments, there is provided a carbon fiber prepreg capable of giving a CFRP structural body having improved flame retardancy.

### [Brief Description of Drawings]

Fig. 1 is a perspective view showing an example of a CFRP structural body.
Fig. 2 is a plan view of the CFRP structural body shown in Fig. 1.
Fig. 3 is a drawing for illustrating an SMC manufacturing method.

### [Description of Embodiments]

In the present specification, the carbon fiber content of a prepreg comprising a carbon fiber mat and matrix resin composition or of a CFRP comprising a carbon fiber mat and matrix resin composition means a mass ratio of carbon fibers derived from the carbon fiber mat in the prepreg or CFRP. For example, in a case of a CFRP obtained by curing a carbon fiber prepreg comprising a carbon fiber mat formed of chopped carbon fiber bundles impregnated with a thermosetting resin composition, the carbon fiber content is a ratio of a mass of carbon fibers derived from the chopped carbon fiber bundle to a mass of the CFRP. For example, when milled carbon fibers are blended in a resin composition for impregnation when a carbon fiber prepreg is manufactured, a mass of the milled carbon fibers is not included in a carbon fiber mass when calculating a carbon fiber content of this carbon fiber prepreg.

One of the embodiments of the present invention relates to a CFRP structural body.

The carbon fiber content of the CFRP forming the CFRP structural body according to the embodiment is 60% by mass or more and may be 70% by mass or more. The carbon fiber content of the CFRP has no particular upper limit, but from the viewpoint of production efficiency, may be set to 85% by mass or less, 80% by mass or less, or 75% by mass or less.

The CFRP structural body according to the embodiment preferably does not have a part with a thickness of less than 4 mm.

The CFRP structural body according to the embodiment may have at least one of a plate-shaped part, a tubular part, a rod-shaped part, and a hollow part. The CFRP structural body according to the embodiment may not include a part not corresponding to any of the plate-shaped part, tubular part, rod-shaped part, and hollow part.

Plate-shaped parts may be flat or may be bent.

Tubular parts may be straight or may be bent. The cross-sectional shape of the tubular part is not limited and may be circular, semicircular, elliptical, rectangular, polygonal, or the like.

The thickness in the tubular part means the thickness of the tube wall.

Rod-shaped parts may be straight or may be bent. The cross-sectional shape of the rod-shaped part is not limited and may be circular, semicircular, elliptical, rectangular, polygonal, or the like.

The thickness in the rod-shaped part means the minimum width of the cross-section of the part.

The hollow part comprises a cavity and a wall surrounding it.

The shape of the cavity is not limited.

The thickness in the hollow part means the thickness of the wall.

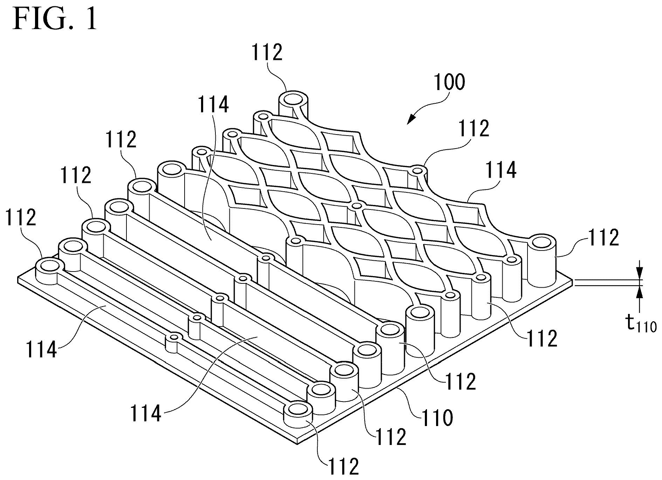

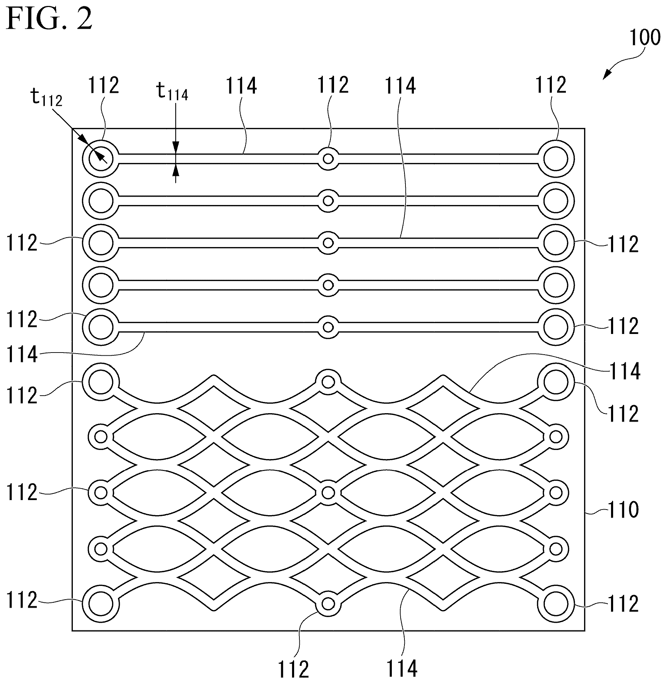

A structural body 100, shown in perspective view in Fig. 1 and in a plan view in Fig. 2 has a structure which the CFRP structural body according to the embodiment may have, that is, a structure in which a plurality of bosses 112 and a plurality of ribs 114 are arranged on one surface side of a base plate 110. All of the bosses 112, all of the ribs 114, and the base plate 110 are integrally molded with CFRP.

The structural body 100 does not have a part with a thickness of less than 4 mm. To rephrase, in the structural body 100, a thickness t₁₀₀ of the base plate 110, a thickness t₁₁₂ of each boss 112, and a thickness t₁₁₄ of each rib 114 are all 4 mm or more.

Here, the thickness t₁₁₂ of the boss 112 and the thickness t₁₁₄ of the rib 114 are each the minimum thickness, that is, the thickness at the part where the thickness is the smallest. For example, when the bosses 112 and ribs 114 are designed so that the thicknesses thereof decrease with distance from the base plate 110 with the object of providing a draft angle, the thicknesses at the parts furthest from the base plate 110 are treated as the thicknesses of the bosses 112 and ribs 114.

The CFRP structural body according to the embodiment is molded from a carbon fiber prepreg, for example, by a compression molding method.

The carbon fiber content of the CFRP forming the CFRP structural body molded using the compression molding method is equivalent to the carbon fiber content of the carbon fiber prepreg used for the material. Accordingly, for example, it is possible to obtain CFRP with a carbon fiber content of approximately 60% by mass by curing a carbon fiber prepreg with a carbon fiber content of approximately 60% by mass while applying pressure thereto.

The carbon fiber prepreg used for molding the CFRP structural body according to the embodiment is manufactured by a method of impregnating a carbon fiber mat formed of chopped carbon fiber bundles with filament counts of 3K or less with a resin composition. The carbon fiber mat may include a chopped carbon fiber bundle with a filament count greater than 3K as long as the effect of the invention is not impaired. The content of the chopped carbon fiber bundle with a filament count greater than 3K in this carbon fiber mat is preferably less than 1% by mass and more preferably 0.7% by mass or less.

The filament count of a carbon fiber bundle is often expressed in units of 1,000 filaments. For example, a chopped carbon fiber bundle with a filament count of 3K means a chopped carbon fiber bundle comprising approximately 3,000 filaments.

The carbon fiber prepreg is not limited to, but preferably is a sheet molding compound (SMC).

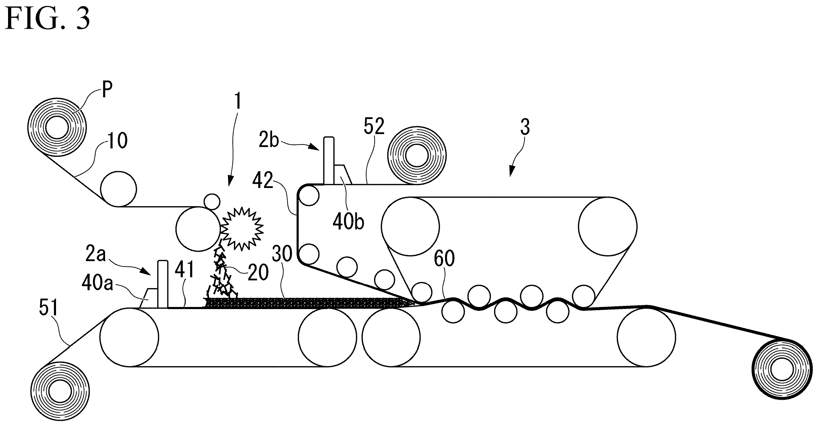

A typical method of manufacturing an SMC which may be used for molding the CFRP structural body according to the embodiment will be described with reference to Fig. 3 as follows.

A continuous carbon fiber bundle 10 is drawn from a carbon fiber package P and conveyed to a rotary cutter 1.

The continuous carbon fiber bundle 10 is cut by the rotary cutter 1 to form chopped carbon fiber bundles 20.

On the upper surface of a first carrier film 51 traveling below the rotary cutter 1, a first resin paste layer 41 is provided which is formed by applying a first resin paste 40a with a first applicator 2a provided with a doctor blade.

The first resin paste 40a comprises a thermosetting resin composition including a thickener added therein and the viscosity thereof at 25°C is, for example, 10 Pa·s or less.

The chopped carbon fiber bundles 20 produced by cutting the continuous carbon fiber bundle 10 fall and piles up on the first resin paste layer 41 to form a carbon fiber mat 30.

Following the formation of the carbon fiber mat 30, a second carrier film 52 is laminated on the upper surface side of the first carrier film 51 to form a stack 60. Before the lamination, on one surface of the second carrier film 52, a second resin paste layer 42 is provided which is formed by applying a second resin paste 40b with a second applicator 2b provided with a doctor blade. The second resin paste 40b usually comprises a thermosetting resin composition having the same or substantially the same formulation as the first resin paste.

The stack 60 is formed so that the first resin paste layer 41, the carbon fiber mat 30, and the second resin paste layer 42 are interposed between the first carrier film 51 and the second carrier film 52.

To impregnate the carbon fiber mat 30 with the first resin paste 40a and the second resin paste 40b, the stack 60 is pressed with an impregnation machine 3.

The stack 60 which passed through the impregnation machine 3 is wound onto a bobbin. When the first resin paste 40a and second resin paste 40b are sufficiently thickened by keeping the stack 60 heated together with the bobbin for a certain period of time, the SMC is completed. The viscosity at 25°C of the resin pastes after thickening is, for example, 1,000 Pa·s or more and 100,000 Pa·s or less.

In this SMC manufacturing method, in order to form the carbon fiber mat 30 with chopped carbon fiber bundles with filament counts of 3K or less, for example, a carbon fiber bundle with a filament count of 3K or less is used as the continuous carbon fiber bundle 10 which is the starting material.

In a preferable method, at any stage before chopping, the continuous carbon fiber bundle 10 is provided with unsplit sections and split sections alternately and periodically in the longitudinal direction thereof and the fiber bundle is split into a plurality of sub-bundles at the split sections. In other words, the continuous carbon fiber bundle 10 is partially split into the sub-bundles and then chopped.

This method may be adopted particularly preferably when the filament count of the continuous carbon fiber bundle 10 is 10K or more, such as 12K, 15K, 18K, 24K, 48K, or 50K. An average filament count of the sub-bundles in the split sections is 3K or less and preferably 2.5K or less.

When a continuous carbon fiber bundle with a filament count of N is partially split into n sub-bundles, N/n is the average filament count of the sub-bundle.

The length of the split section is usually 50 cm or more and has no particular upper limit, but in consideration of the ease of handling the continuous carbon fiber bundle, it may be set the length to 3 m or less, 2 m or less, or 1 m or less, for example. The shorter the unsplit sections, the more preferable, as long as handling of the continuous carbon fiber bundle is not difficult. The ratio of the unsplit sections in the total continuous carbon fiber bundle is preferably 1% or less and more preferably 0.7% or less.

For example, when the continuous carbon fiber bundle 10 has a filament count of 18K and is partially split into 9 sub-bundles before chopping, the carbon fiber mat 30 is formed of a chopped carbon fiber bundle with an average filament count of 2K.

An SMC manufacturing apparatus provided with a mechanism for partially spitting a continuous carbon fiber bundle into a plurality of sub-bundles is disclosed, for example, in PCT International Publication No. WO2019/194090. In a preferable example, the continuous carbon fiber bundle 10, which is a starting material, may be partially split into a plurality of the sub-bundles in a separate step beforehand.

It is not necessary for all the chopped carbon fiber bundles with filament counts of 3K or less forming the carbon fiber mat 30 to have the same filament count. It is possible to form the carbon fiber mat from chopped carbon fiber bundles with various filament counts that are 3K or less.

The filament count of the chopped carbon fiber bundle 20 forming the carbon fiber mat 30 is preferably 0.5K or more and more preferably 1K or more. The reason for this is that a carbon fiber bundle with a filament count of 0.5 K or more easily maintains straightness and exhibits a relatively high reinforcing effect. It is not unacceptable for the carbon fiber mat to contain chopped carbon fiber bundles with filament counts of less than 1K or less than 0.5K.

The fiber length of the chopped carbon fiber bundle 20 is, for example, 5 mm to 100 mm, and typically, approximately 13 mm (approximately 0.5 inches), approximately 25 mm (approximately 1 inch), or approximately 50 mm (approximately 2 inches).

The shape of the chopped carbon fiber bundle 20 is flat and typically, without limitation, has a thickness of 0.05 mm to 0.2 mm and a maximum width in the direction perpendicular to the fiber direction of 1 mm to 5 mm.

When the chopped carbon fiber bundle 20 is viewed in a plan view, each end may be cut perpendicular to the fiber direction or may be cut at an angle other than 90 degrees with respect to the fiber direction.

The carbon fiber content of the SMC is 60% by mass or more and may be 70% by mass or more, with no particular upper limit, but, from the viewpoint of production efficiency, it may be set to 85% by mass or less, 80% by mass or less, or 75% by mass or less.

Although not limited thereto, an areal weight (mass per unit area) of the SMC may be, for example, 500 g/m² to 5,000 g/m². The higher the carbon fiber content of the SMC to be manufactured and the lower the filament count of the chopped carbon fiber bundle forming the carbon fiber mat, the lower the impregnation rate, and therefore, the SMC with a smaller areal weight is easier to manufacture.

In an advantageous example, the thermosetting resin blended in the first resin paste 40a and the second resin paste 40b is at least one and preferably both of a vinyl ester resin and an unsaturated polyester resin.

In another advantageous example, the thermosetting resin blended in the first resin paste 40a and the second resin paste 40b is an epoxy resin.

The CFRP structural body according to the embodiment exhibits relatively favorable flame retardancy even when not specifically containing any component having a flame retardant effect. That is, the CFRP structural body according to the embodiment exhibits relatively favorable flame retardancy even when not containing any one of halogens (F, Cl, Br, and I), phosphorus (P), or antimony (Sb).

The components having a flame retardant effect are flame retardants and halogenated resins. Halogenated resins are resins having halogen groups in a molecule.

Halogen, phosphorus, and antimony are all elements included in typical flame retardants.

When the thickness of a part or the whole of the CFRP structural body according to the embodiment is 3 mm or less, the flame retardancy is decreased in comparison with not having a part with a thickness of less than 4 mm.

With the object of supplementing, reliably developing, or further improving the flame retardancy, the CFRP structural body according to the embodiment may comprise the flame retardant added therein.

To add a flame retardant to the CFRP structural body according to the embodiment, for example, when the structural body is molded from an SMC, the flame retardant may be blended into the thermosetting resin composition used for the SMC.

The flame retardants which may be added to the CFRP structural body according to the embodiment are not particularly limited and may be appropriately selected from any of the phosphorus-based flame retardants, halogen-based flame retardants, nitrogen-based flame retardants, and inorganic flame retardants used in the related art to make polymer materials flame retardant.

Typical examples of compounds known as flame retardants are listed below.

Examples of phosphorus-based flame retardants are non-halogenated phosphate esters such as trimethyl phosphate, triethyl phosphate, tributyl phosphate, trioctyl phosphate, tributoxyethyl phosphate, triphenyl phosphate, tricresyl phosphate, credyldiphenyl phosphate, octyldiphenyl phosphate, and aromatic polyphosphates; and halogenated phosphate esters such as tris(chloroethyl)phosphate, tris(dichloropropyl)phosphate, tris(chloropropyl)phosphate, bis(2,3-dibromopropyl)2,3-dichloropropyl phosphate, tris(2,3-dibromopropyl) phosphate, bis(chloropropyl) octyl phosphate, alkyl halide polyphosphates, and alkyl halide polyphosphonates.

Another example of a phosphorus-based flame retardant is a phosphinic acid metal salt. Here, phosphinic acid metal salts include not only metal salts of phosphinic acids not having organic groups, but also metal salts of organic phosphinic acids such as diphenyl phosphinic acid, monophenyl phosphinic acid, dialkyl phosphinic acid, mono-alkyl phosphinic acid, and alkylphenyl phosphinic acid and metal salts of diphosphinic acids such as methane (dimethyl phosphinic acid) and benzene-1,4-di(methyl phosphinic acid).

Examples of dialkyl phosphinic acids include dimethyl phosphinic acid, ethyl methyl phosphinic acid, diethyl phosphinic acid, and methyl-n-propyl phosphinic acid. Examples of mono-alkyl phosphinic acids include methyl phosphinic acid, ethyl phosphinic acid, and n-propyl phosphinic acid. Examples of alkylphenyl phosphinic acids include methylphenyl phosphinic acid.

The phosphinic acid metal salts may be aluminum phosphinic acid salts, zinc phosphinic acid salts, calcium phosphinic acid salts, magnesium phosphinic acid salts, and the like, without being limited thereto.

Further examples of phosphorus-based flame retardants are red phosphorus, ammonium polyphosphate, melamine phosphate, guanidine phosphate, guanylurea phosphate, and the like.

Examples of halogen-based flame retardants are hexabromobenzene, hexabromodiphenyl ether, tribromophenol, decabromodiphenyl ether, dibromocresyl glycidyl ether, decabromodiphenyl oxide, tetrabromobisphenol A, tetrabromobisphenol A derivatives [tetrabromobisphenol A epoxy oligomers, tetrabromobisphenol A carbonate oligomers, tetrabromobisphenol A bis(dibromopropyl ether), tetrabromobisphenol A bis(aryl ether), and the like], bis(pentabromophenyl) ethane, 1,2-bis(2,4,6-tribromophenoxy) ethane, 2,4,6-tris(2,4,6-tribromophenoxy)-1,3,5-triazine, brominated polyphenylene ether, brominated polystyrene, polybrominated styrene, brominated polyethylene, ethylene bistetrabromophthalimide, hexabromocyclododecane, hexabromobenzyl acrylate, pentabromobenzyl acrylate, brominated epoxy compounds (monoepoxy compounds obtained by reaction of brominated phenols and epichlorohydrin), chlorinated paraffins, chlorinated polyethylene, and the like.

Examples of nitrogen-based flame retardants are melamine compounds such as melamine cyanurate, guanidine compounds, triazine compounds, ammonium phosphate, ammonium carbonate, and the like.

Examples of inorganic flame retardants are antimony trioxide, sodium antimonate, aluminum hydroxide, calcium carbonate, and the like.

One of the above-described compounds exemplified as flame retardants may be used alone or two or more of those compounds may be used in combination. In a suitable example, the flame retardant added to the CFRP structural body according to the embodiment is selected from compounds which do not contain a halogen.

With the object of supplementing, reliably developing, or further improving the flame retardancy of the CFRP structural body of the embodiment, instead of adding a flame retardant or in addition to adding a flame retardant, halogenated resins may be used as a material of the CFRP structural body according to the embodiment. Among halogenated resins, brominated resins are particularly effective in achieving the objects described above.

For example, when the CFRP structural body according to the embodiment is molded from an SMC, thermosetting resins having bromine groups may be blended in the thermosetting resin composition used in the SMC.

Suitable examples of thermosetting resins having bromine groups are a brominated bisphenol A type vinyl ester resin and a brominated bisphenol A type epoxy resin.

The brominated bisphenol A type vinyl ester resin may be used in combination with a brominated novolac type vinyl ester resin and may be blended in the thermosetting resin composition along with either one or both of a non-brominated vinyl ester resin and a non-brominated unsaturated polyester resin.

The brominated bisphenol A type epoxy resin may be used in combination with a brominated novolac type epoxy resin and may be blended in the thermosetting resin composition along with a non-brominated epoxy resin.

In a modified embodiment, the thickness of a part or the whole of the CFRP structural body according to the embodiment may be set to be less than 4 mm and a flame retardant may be added to the part with the thickness of less than 4 mm. In addition to the addition of the flame retardant or instead of the addition of the flame retardant, a halogenated resin may be used in the part with the thickness of less than 4 mm.

A description will be given below of the results of experiments conducted by the present inventors and others.

In the experiments, an SMC was manufactured, a CFRP plate was molded from the SMC by the compression molding method, and a test specimen cut from the CFRP plate was subjected to flammability tests.

The detailed procedure is as follows.

### [Experiment 1]

### (Production of SMC)

SMCs were manufactured by the following procedure using an ordinary SMC manufacturing apparatus.

First, a thermosetting resin composition paste was uniformly applied on one surface of a first carrier film made of polyethylene and then chopped carbon fiber bundles were scattered on the surface of the first carrier film coated with the thermosetting resin composition paste to form a carbon fiber mat.

The thermosetting resin composition paste was prepared by blending vinyl ester resin, unsaturated polyester resin, styrene, a thickener, a polymerization initiator, and a polymerization inhibitor in a separate step. Chopped carbon fiber bundles were cut to have lengths of approximately 2.5 cm from continuous carbon fiber bundles using a rotary cutter installed above the traveling carrier film.

The amount of thermosetting resin composition paste applied on the carrier film and the amount of continuous carbon fiber bundles supplied to the rotary cutter were adjusted in consideration of the carbon fiber content of the SMC to be manufactured.

Next, by over laying a second carrier film made of polyethylene, on one surface of which the same thermosetting resin composition paste was uniformly applied, on the traveling first carrier film and applying pressure with a roller, a stack was obtained in which the carbon fiber mat impregnated with the thermosetting resin composition paste was interposed between the first carrier film and second carrier film.

The stack was held at 25°C for 7 days to complete the SMC.

The SMCs manufactured are the seven types shown in Table 1 below.

### [Table 1]

**Table 1**

| Name | Filament count of continuous carbon fiber bundle | Areal weight [g/m²] | Carbon fiber content of SMC [% by mass] | Carbon fiber content of 4 mm thick CFRP [% by mass] |
|---|---|---|---|---|
| SMC-1 | 15K | 3200 | Not measured | 52 |
| SMC-2 | 3K | 2600 | Not measured | 54 |
| SMC-3 | Average 1.7K | 2200 | 50 | 49 |
| SMC-4 | 15K | 2800 | 60 | 59 |
| SMC-5 | 3K | 1800 | Not measured | 61 |
| SMC-6 | Average 1.7K | 1900 | 58 | 59 |
| SMC-7 | Average 1.7K | 1600 | 68 | 68 |

In Table 1, the filament count of the continuous carbon fiber bundle is a filament count of the continuous carbon fiber bundle used as raw material. In the manufacturing of SMC-3, SMC-6, and SMC-7, a continuous carbon fiber bundle with a filament count of 15K was partially split into 9 sub-bundles and used, thus, the average filament count of the sub-bundles was 1.7K. In this continuous carbon fiber bundle, a length of each split section was 700 mm and a length of each unsplit section was 5 mm, thus, the ratio of the unsplit sections in the total continuous carbon fiber bundle was 0.7%.

The carbon fiber content of the SMC shown in Table 1 was determined by a method including removing the thermosetting resin composition from a 200 mm square piece of the SMC by dissolving it with an organic solvent and dividing the weight of the remaining carbon fiber by the weight of the SMC piece.

The carbon fiber content of the 4 mm thick CFRP shown in Table 1 was a carbon fiber content determined based on specific gravity measurements of a CFRP piece with a thickness of 4 mm produced from each SMC using the compression molding method.

### (Flammability Test)

From each of SMC-1 to SMC-7, CFRP plates with a thickness of 2 mm, 3 mm, or 4 mm were molded at a temperature of 140°C. The molding time was set to (t + 1) min (where t is the thickness of CFRP expressed in units of mm), thus, the molding time for a 2 mm thick CFRP plate was 3 minutes, the molding time for a 3 mm thick CFRP plate was 4 minutes, and the molding time for a 4 mm thick CFRP plate was 5 minutes.

The thicknesses of the CFRP plates were adjusted by stacking the SMCs.

From each of the obtained CFRP plates, one test specimen of 125 mm in length and 13 mm in width was cut out and used to perform a vertical flammability test.

As the conditions for the vertical flammability test, a 20 mm vertical flammability test (IEC60695-11-10 Method B, ASTM D3801) was used as a reference.

Specifically, the test specimen was held vertically, a burner flame was brought into contact with its lower end for 10 seconds and then the burner flame was withdrawn, and the afterflame time of the test specimen was measured. Next, as soon as the flaming ceased, a second flame was applied for 10 seconds and the afterflame time was measured in the same manner as the first time. No particular pre-treatment of the test specimens was performed.

The flame retardancy of each specimen was evaluated according to the following three levels.

Excellent: Total afterflame time of 10 seconds or less.

Good: Total afterflame time of 30 seconds or less.

Poor: Total afterflame time exceeds 30 seconds.

The results of the vertical flammability test are shown in Table 2.

### [Table 2]

**Table 2**

| | SMC | Thickness [mm] | Flame retardancy |
|---|---|---|---|
| Test specimen 1 | SMC-1 | 2 | Poor |
| Test specimen 2 | SMC-7 | 2 | Poor |
| Test specimen 3 | SMC-5 | 3 | Poor |
| Test specimen 4 | SMC-6 | 3 | Poor |
| Test specimen 5 | SMC-7 | 3 | Poor |
| Test specimen 6 | SMC-1 | 4 | Poor |
| Test specimen 7 | SMC-2 | 4 | Good |
| Test specimen 8 | SMC-3 | 4 | Poor |
| Test specimen 9 | SMC-4 | 4 | Good |
| Test specimen 10 | SMC-5 | 4 | Excellent |
| Test specimen 11 | SMC-6 | 4 | Excellent |
| Test specimen 12 | SMC-7 | 4 | Excellent |

As shown in Table 2, the flame retardancy was evaluated good or excellent only with test specimens with a thickness of 4 mm. In particular, the flame retardancy was evaluated excellent only with test specimen 10 produced from SMC-5 using a continuous carbon fiber bundle with a filament count of 3K as a raw material and test specimen 11 and test specimen 12 produced respectively from SMC-6 and SMC-7 each using a continuous carbon fiber bundle with a filament count of 15K partially split into nine sub-bundles as a raw material.

No droplets were observed in any of the flammability tests using test specimen 1 to test specimen 12.

### [Experiment 2]

An SMC (referred to below as "SMC-8") was manufactured in the same manner as in Experiment 1, except that an epoxy resin composition was used as the thermosetting resin composition instead of the vinyl ester resin composition.

In the epoxy resin composition, an epoxy resin, a curing agent, a curing aid, and a thickener were blended. In the prepared epoxy resin composition, bisphenol A type epoxy resin [jER (registered trademark) 827, manufactured by Mitsubishi Chemical Corporation] accounted for 80% of the total mass.

As the continuous carbon fiber bundle, a continuous carbon fiber bundle with a filament count of 15K partially split into 9 sub-bundles (average filament count 1.7K) in the same manner as those used in SMC-3, SMC-6, and SMC-7 was used. The carbon fiber content of the manufactured SMC-8 was 61% by mass. In a CFRP piece with a thickness of 4 mm produced from SMC-8, the chopped carbon fiber content determined based on specific gravity measurements was 62% by mass.

From SMC-8, CFRP plates with thicknesses of 2 mm, 3 mm, and 4 mm were molded at a temperature of 130°C. The molding time was set to (t x 3) min (where t is the thickness of CFRP expressed in units of mm), thus, the molding time for a 2 mm thick CFRP plate was 6 minutes, the molding time for a 3 mm thick CFRP plate was 9 minutes, and the molding time for a 4 mm thick CFRP plate was 12 minutes.

The thicknesses of the CFRP plates were adjusted by stacking the SMCs.

Test specimens were cut out from the CFRP plates and subjected to a vertical flammability test in the same manner as in Experiment 1 and the results are shown in Table 3. No droplets were observed in the flammability tests using any of the test specimens.

### [Table 3]

**Table 3**

| | SMC | Thickness [mm] | Flame retardancy |
|---|---|---|---|
| Test specimen 21 | SMC-8 | 2 | Poor |
| Test specimen 22 | SMC-8 | 3 | Good |
| Test specimen 23 | SMC-8 | 4 | Excellent |

For reference, in the UL94 standard, a total afterflame time of 10 seconds or less is a requirement for UL94 V-0 certification and a total afterflame time of 30 seconds or less is a requirement for UL94 V-1 and V-2 certification.

In the UL94 standard, that cotton placed under the test specimen is not ignited by drops is also a requirement for UL94 V-0 certification and UL94 V-1 certification.

The present invention was described above in terms of specific embodiments and each embodiment is presented as an example and does not limit the scope of the present invention.

### [Industrial Applicability]

The CFRP structural body according to the embodiment may be used in a range of equipment and goods including various types of transportation equipment such as aircraft, unmanned aerial vehicles, automobiles, railcars and ships, industrial equipment, medical equipment, welfare and nursing care products, housing equipment, and sporting goods.

### [Reference Signs List]

1: Rotary cutter
2a: First applicator
2b: Second applicator
3: Impregnation machine
10: Continuous carbon fiber bundle
20: Chopped carbon fiber bundle
30: Carbon fiber mat
40a: First resin paste
40b: Second resin paste
41: First resin paste layer
42: Second resin paste layer
51: First carrier film
52: Second carrier film
60: Stack

## Claims

1. A carbon fiber reinforced plastic (CFRP) structural body, being a structural body comprising CFRP,
wherein the CFRP structural body is molded from a carbon fiber prepreg comprising a carbon fiber mat formed of chopped carbon fiber bundles with filament counts of 3K or less impregnated with a resin composition,
a carbon fiber content of the CFRP is 60% by mass or more, and
the CFRP structural body does not have a part with a thickness of less than 4 mm.

2. The CFRP structural body according to claim 1, wherein the CFRP structural body does not comprise a halogen, phosphorus, and antimony.

3. The CFRP structural body according to claim 1, comprising a flame retardant added therein.

4. The CFRP structural body according to claim 3, wherein the CFRP structural body does not comprise a halogen.

5. The CFRP structural body according to any one of claims 1 to 4,
wherein the resin composition is a thermosetting resin composition.

6. The CFRP structural body according to claim 5,
wherein the thermosetting resin composition comprises a vinyl ester resin blended therein, an unsaturated polyester resin blended therein, or an epoxy resin blended therein.

7. A manufacturing method of a carbon fiber reinforced plastic (CFRP) structural body, comprising molding a structural body by a compression molding method from a carbon fiber prepreg comprising a carbon fiber mat impregnated with a resin composition,
wherein the carbon fiber mat is formed of chopped carbon fiber bundles with filament counts of 3K or less,
a carbon fiber content of the carbon fiber prepreg is 60% by mass or more, and
the structural body does not have a part with a thickness of less than 4 mm.

8. The manufacturing method according to claim 7,
wherein the carbon fiber prepreg does not comprise a halogen, phosphorus, and antimony.

9. The manufacturing method according to claim 7,
wherein the resin composition comprises a flame retardant blended therein.

10. The manufacturing method according to claim 9,
wherein the carbon fiber prepreg does not comprise a halogen.

11. The manufacturing method according to any one of claims 7 to 10,
wherein the resin composition is a thermosetting resin composition.

12. The manufacturing method according to claim 11,
wherein the thermosetting resin composition comprises a vinyl ester resin blended therein an unsaturated polyester resin blended therein, or an epoxy resin blended therein.

13. The manufacturing method according to any one of claims 7 to 12,
wherein the carbon fiber prepreg is a sheet molding compound.

## Patentansprüche

1. Strukturkörper aus kohlenstofffaserverstärktem Kunststoff (CFK), welcher ein Strukturkörper, der CFK umfasst, ist,
wobei der CFK-Strukturkörper geformt ist aus einem Kohlenstofffaser-Prepreg, das eine Kohlenstofffasermatte umfasst, die aus geschnittenen Kohlenstofffaserbündeln mit einer Filamentanzahl von 3K oder weniger gebildet und mit einer Harzzusammensetzung imprägniert ist,
ein Kohlenstofffasergehalt des CFK 60Massenprozent oder mehr beträgt, und
der CFK-Strukturkörper keinen Abschnitt mit einer Dicke von weniger als 4 mm aufweist.

2. CFK-Strukturkörper gemäß Anspruch 1, wobei der CFK-Strukturkörper kein Halogen, keinen Phosphor und kein Antimon umfasst.

3. CFK-Strukturkörper gemäß Anspruch 1, der ein ihm zugesetztes Flammschutzmittel umfasst.

4. CFK-Strukturkörper gemäß Anspruch 3, wobei der CFK-Strukturkörper kein Halogen umfasst.

5. CFK-Strukturkörper gemäß mindestens einem der Ansprüche 1 bis 4, wobei die Harzzusammensetzung eine duroplastische Harzzusammensetzung ist.

6. CFRP-Strukturkörper gemäß Anspruch 5, wobei die duroplastische Harzzusammensetzung ein darin eingemischtes Vinylesterharz, ein darin eingemischtes ungesättigtes Polyesterharz oder ein darin eingemischtes Epoxidharz umfasst.

7. Herstellungsverfahren für einen Strukturkörper aus kohlenstofffaserverstärktem Kunststoff (CFK), welches das Formen eines Strukturkörpers umfasst durch ein Pressformverfahren aus einem Kohlenstofffaser-Prepreg, das eine mit einer Harzzusammensetzung imprägnierte Kohlenstofffasermatte umfasst,
wobei die Kohlenstofffasermatte aus geschnittenen Kohlenstofffaserbündeln mit einer Filamentanzahl von 3K oder weniger gebildet ist,
der Kohlenstofffasergehalt des Kohlenstofffaser-Prepregs 60 Massenprozent oder mehr beträgt, und
der Strukturkörper keinen Abschnitt mit einer Dicke von weniger als 4 mm aufweist.

8. Herstellungsverfahren gemäß Anspruch 7, bei dem das Kohlenstofffaser-Prepreg kein Halogen, keinen Phosphor und kein Antimon umfasst.

9. Herstellungsverfahren gemäß Anspruch 7, bei dem die Harzzusammensetzung ein darin eingemischtes Flammschutzmittel umfasst.

10. Herstellungsverfahren gemäß Anspruch 9, bei dem das Kohlefaser-Prepreg kein Halogen enthält.

11. Herstellungsverfahren gemäß mindestens einem der Ansprüche 7 bis 10, bei dem die Harzzusammensetzung eine duroplastische Harzzusammensetzung umfasst.

12. Herstellungsverfahren gemäß Anspruch 11, bei dem die duroplastische Harzzusammensetzung ein darin eingemischtes Vinylesterharz, ein darin eingemischtes ungesättigtes Polyesterharz oder ein darin eingemischtes Epoxidharz umfasst.

13. Herstellungsverfahren gemäß mindestens einem der Ansprüche 7 bis 12, bei dem das Kohlefaser-Prepreg eine Verbindung zum Formen von Platten ist.

## Revendications

1. Corps structural en plastique renforcé de fibres de carbone (CFRP), étant un corps structural comprenant du CFRP,
dans lequel le corps structural de CFRP est moulé à partir d'un préimprégné de fibres de carbone comprenant un mat de fibres de carbone formé de faisceaux de fibres de carbone coupées présentant un nombre de filaments de 3K ou moins imprégné d'une composition de résine,
une teneur en fibres de carbone du CFRP est de 60 % en masse ou plus, et
le corps structural de CFRP ne présente pas de partie présentant une épaisseur inférieure à 4 mm.

2. Corps structural de CFRP selon la revendication 1, dans lequel le corps structural de CFRP ne comprend pas d'halogène, de phosphore et d'antimoine.

3. Corps structural de CFRP selon la revendication 1, comprenant un retardateur de flamme ajouté dans celui-ci.

4. Corps structural de CFRP selon la revendication 3, dans lequel le corps structural de CFRP ne comprend pas d'halogène.

5. Corps structural de CFRP selon l'une quelconque des revendications 1 à 4,
dans lequel la composition de résine est une composition de résine thermodurcissable.

6. Corps structural de CFRP selon la revendication 5,
dans lequel la composition de résine thermodurcissable comprend une résine vinylester incorporée dans celle-ci, une résine polyester insaturée incorporée dans celle-ci, ou une résine époxy incorporée dans celle-ci.

7. Procédé de fabrication d'un corps structural en plastique renforcé de fibres de carbone (CFRP), comprenant le moulage d'un corps structural par un procédé de moulage par compression à partir d'un préimprégné de fibres de carbone comprenant un mat de fibres de carbone imprégné d'une composition de résine,
dans lequel le mat de fibres de carbone est formé de faisceaux de fibres de carbone coupées présentant un nombre de filaments de 3K ou moins,
une teneur en fibres de carbone du préimprégné de fibres de carbone est de 60 % en masse ou plus, et
le corps structural ne présente pas de partie présentant une épaisseur inférieure à 4 mm.

8. Procédé de fabrication selon la revendication 7,
dans lequel le préimprégné de fibres de carbone ne comprend pas d'halogène, de phosphore et d'antimoine.

9. Procédé de fabrication selon la revendication 7,
dans lequel la composition de résine comprend un retardateur de flamme incorporé dans celle-ci.

10. Procédé de fabrication selon la revendication 9,
dans lequel le préimprégné de fibres de carbone ne comprend pas d'halogène.

11. Procédé de fabrication selon l'une quelconque des revendications 7 à 10,
dans lequel la composition de résine est une composition de résine thermodurcissable.

12. Procédé de fabrication selon la revendication 11,
dans lequel la composition de résine thermodurcissable comprend une résine vinylester incorporée dans celle-ci, une résine polyester insaturée incorporée dans celle-ci, ou une résine époxy incorporée dans celle-ci.

13. Procédé de fabrication selon l'une quelconque des revendications 7 à 12,
dans lequel le préimprégné de fibres de carbone est un composé de moulage de feuille.
